Europäisches Patentamt

European Patent Office

Office européen des brevets

(19)

(11) **EP 0 916 544 B1**

(12) **EUROPEAN PATENT SPECIFICATION**

(45) Date of publication and mention
of the grant of the patent:
**20.03.2002 Bulletin 2002/12**

(21) Application number: **97933857.1**

(22) Date of filing: **31.07.1997**

(51) Int Cl.⁷: **B60K 23/08**, B60K 17/35,
B60K 17/356

(86) International application number:
**PCT/JP97/02658**

(87) International publication number:
**WO 98/04429 (05.02.1998 Gazette 1998/05)**

(54) **TWO-WHEEL/FOUR-WHEEL DRIVING HYDRAULIC TRAVELLING APPARATUS OF VEHICLE AND DRIVING SWITCHING METHOD**

VORRICHTUNG FÜR KRAFTFAHRZEUG MIT HYDRAULISCHEM ZWEIRAD-VIERRADANTRIEB UND ANTRIEBSUMSCHALTMETHODE

APPAREIL DE DEPLACEMENT HYDRAULIQUE POUR VEHICULES A QUATRE ROUES /DEUX ROUES MOTRICES ET PROCEDE DE COMMUTATION D'ENTRAINEMENT

(84) Designated Contracting States:
**DE**

(30) Priority: **31.07.1996 JP 21802096**

(43) Date of publication of application:
**19.05.1999 Bulletin 1999/20**

(73) Proprietor: **KOMATSU LTD.**
**Minato-ku, Tokyo 107-8414 (JP)**

(72) Inventor: **KANAYAMA, Noboru,**
**Komatsu Ltd. Awazu Plant**
**Komatsu-shi, Ishikawa 923-03 (JP)**

(74) Representative: **Viering, Jentschura & Partner**
**Postfach 22 14 43**
**80504 München (DE)**

(56) References cited:
JP-A- 3 182 840     JP-A- 5 131 862
JP-A- 6 156 101     JP-A- 56 075 219
JP-A- 61 018 524

**Description**

The invention relates to a drive switching method and a two-wheel/four-wheel drive hydraulic traveling apparatus according to the precharacterizing part of claims 1 and 2, respectively.

As the two-wheel/four-wheel drive switching apparatus for a vehicle in accordance with a prior art, the followings have been known.

For example, in Japanese Unexamined Utility Model Publication No. 62-137129, there is described an apparatus comprising a hydraulic motor for driving a rear wheel directly receiving a pressurized oil from a variable volume type hydraulic pump and a hydraulic motor for driving a front wheel receiving the pressurized oil via a communication valve, in which the communication valve is set in a shut-off state so as to set in a two-wheel drive traveling when a speed change gear is in a high speed stage and in a communication state so as to set in a four-wheel drive traveling when the speed change gear is in a low speed stage.

Further, in Japanese Unexamined Patent Publication No. 3-103670 representing the closest prior art, there is described an apparatus comprising a hydraulic motor for driving a rear wheel directly receiving a pressurized oil from a variable volume type hydraulic pump and a hydraulic motor for driving a front wheel receiving the pressurized oil via a communication valve, which is provided with means for setting the communication valve in a shut-off position so as to set in a two-wheel drive traveling, on the contrary, setting the communication valve in a communication position so as to set in a four-wheel drive traveling and further setting the hydraulic motor for driving the front wheel not to be inversely rotated by a rotation of the front wheel at a time of traveling in a two-wheel forward drive traveling, that is, a one-way clutch.

However, there are problems as mentioned below in the prior arts mentioned above.

(1) Since the apparatus described in Japanese Unexamined Utility Model Publication No. 62-137129 is structured such as to simply switch the two-wheel drive and the four-wheel drive traveling by the communication valve, a, shock is generated at a time of switching.

(2) Since the apparatus described in Japanese Unexamined Patent Publication No. 3-103670 is structured such that the one-way clutch is provided, a shock is not generated at a time of switching in a forward traveling mode. However, since the one-way clutch is present, a brake force and a backward driving force due to the hydraulic motor are not transmitted to the wheel.

The present invention is made by taking the problems in the prior arts mentioned above into consideration, and an object of the present invention is to provide a two-wheel/four-wheel drive hydraulic traveling apparatus for a vehicle and a drive switching method of the same which does not generate a shock at a time of switching from a two-wheel drive state to a four-wheel drive state.

According to the invention, this is achieved by the features in the characterizing part of claims 1 and 2.

In accordance with the present invention, there is provided a drive switching method for a two-wheel/four-wheel drive hydraulic traveling apparatus of a vehicle having a variable volume type hydraulic pump driven by an engine, a rear wheel drive hydraulic circuit including a variable volume type hydraulic motor which receives a driving pressurized oil from the variable volume type hydraulic pump via a directional switching valve so as to drive a rear wheel, a front wheel drive hydraulic circuit including a fixed volume type hydraulic motor which receives a driving pressurized oil from the variable volume type hydraulic pump via a directional switching valve so as to drive a front wheel, a clutch intermittently connecting between an output shaft of the fixed volume type hydraulic motor and the front wheel, and a communication valve intermittently communicating between the front wheel and rear wheel drive hydraulic circuits, wherein when a signal S2 for switching to the four-wheel drive state is transmitted from a drive switching signal transmission means, the front wheel and rear wheel drive hydraulic circuits are communicated with each other, and an excess flow rate generated by changing a volume of the variable volume type hydraulic motor from a discharge flow rate QP of the variable volume type hydraulic pump is flowed into the front wheel drive hydraulic circuit, and when the rotation of the fixed volume type hydraulic motor reaches a flow rate QF synchronizing with the rotation of the variable volume type hydraulic motor, the clutch is engaged so as to switch to the four-wheel drive state.

As mentioned above, at a time of switching from the two-wheel drive state to the four-wheel drive state, since the volume of the variable volume type hydraulic motor is change until the rotation of the fixed volume type hydraulic motor secures the flow rate QF synchronizing with the rotation of the variable volume type hydraulic motor and the clutch is engaged after the change of the volume is completed, a shock is not generated.

In accordance with the present invention, there is provided a two-wheel/four-wheel drive hydraulic traveling apparatus having a variable volume type hydraulic pump driven by an engine, a rear wheel drive hydraulic circuit including a variable volume type hydraulic motor which receives a driving pressurized oil from the variable volume type hydraulic pump via a directional switching valve so as to drive a rear wheel, a front wheel drive hydraulic circuit including a fixed volume type hydraulic motor which receives a driving pressurized oil from the variable volume type hydraulic pump via a directional switching valve so as to drive a front wheel, a clutch intermittently connecting between an output shaft of the fixed volume type hydraulic motor and the front wheel, and a communication valve intermittently communicating between the front wheel and rear wheel drive hydraulic circuits, wherein there is provided control means structured such as, and a controller for operating a switching valve on the basis of a signal transmitted from the communication valve, wherein a drive switching signal transmission means transmits a signal S2 for switching to a four-wheel drive state from a two-wheel drive state for supplying the pressurized oil to said rear wheel driving hydraulic circuit, and the control means is structured, when receiving the signal S2, to calculate a discharge flow rate QP from a number of rotation Ne of the variable volume type hydraulic pump and a maximum discharge volume Dpmax, to calculate a flow rate QF at which the rotation of the front wheel on the basis of the fixed volume type hydraulic motor is synchronous with the rotation of the rear wheel on the basis of the variable volume type hydraulic motor from a volume DF of the fixed volume type hydraulic motor and a number or rotation NF, to transmit a discharge volume control signal S4 to the variable volume type hydraulic motor so as to generate an excess flow rate corresponding to the flow rate QF, to transmit command signals S7, S63 and S64 to the directional switching valve of the front wheel drive hydraulic circuit and the communication valve during the transmission or after the transmission so that the excess flow rate of the discharge flow rate is flowed into the front wheel drive hydraulic circuit, and to transmit a signal S5 for engaging the clutch when a predetermined time t has passed after the transmission.

The structure mentioned above corresponds to an apparatus obtained by embodying the method mentioned above, and in the same manner as that of the structure of the method mentioned above, a shock is not generated at a time of switching from the two-wheel drive state to the four-wheel drive state.

Fig. 1 is a hydraulic circuit diagram of a two-wheel/four-wheel drive hydraulic traveling apparatus for a vehicle in accordance with a first embodiment of the present invention;
Fig. 2 is a hydraulic circuit diagram of a two-wheel/four-wheel drive hydraulic traveling apparatus for a vehicle in accordance with a second embodiment;
Fig. 3 is a hydraulic circuit diagram of a two-wheel/four-wheel drive hydraulic traveling apparatus for a vehicle in accordance with a third embodiment; and
Fig. 4 is a flow chart of a two-wheel/four-wheel drive switching method in accordance with each of the embodiments.

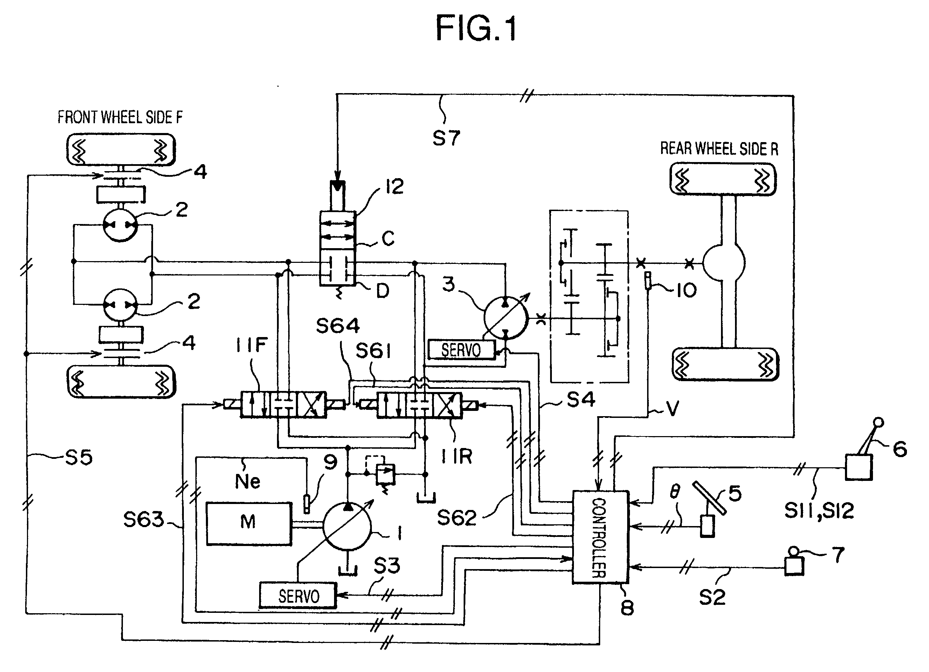

A two-wheel/four-wheel drive hydraulic traveling apparatus for a vehicle in accordance with first to third embodiments of the present invention will be described below with reference to Figs. 1 to 3.

As shown in Figs. 1 to 3, each of the apparatuses in accordance with the first to third embodiments has a variable volume type hydraulic pump 1 driven by an engine (hereinafter, refer to a hydraulic pump 1), right and left fixed volume type hydraulic motors 2 and 2 for driving front wheels (hereinafter, refer to F motors 2 and 2) and a variable volume type hydraulic motor 3 for driving rear wheels (hereinafter, refer to an R motor 3), which receive a pressurized oil from the hydraulic pump 1 so as to rotate, and respective clutches 4 and 4 provided in respective sides of output shafts of the F motors 2. Further, it has an accelerator pedal 5 operated by an operator so as to transmit a pedaling angle signal θ, a forward and backward operating lever 6 operated by the operator so as to transmit signals S11 and S12 at a time of moving forward and backward, switching signal transmission means 7 operated by the operator so as to transmit a switching signal S2 at a time of moving in a four-wheel drive, and a controller 8 receiving the pedaling angle signal θ and each of the signals S11, S12 and S2 so as to input a control signal S3 to a servo mechanism of the hydraulic pump 1, a control signal S4 to a servo mechanism of the R motor 3 and an engaging signal S5 to each of the clutches 4 and 4. Further, an engine rotation sensor 9 for detecting an engine speed Ne and a vehicle speed sensor 10 for detecting a vehicle speed V are provided in each of the apparatuses, and each of the engine speed N2 and the vehicle speed V is also input to the controller 8. Features of each of the apparatuses will be sequentially described below.

The apparatus in accordance with the first embodiment is, as shown in Fig. 1, has the hydraulic pump 1, a front wheel driving hydraulic circuit including the respective F motors 2 and 2 which receive a driving hydraulic pressure from the hydraulic pump 1 via a directional switching valve 11F so as to drive the front wheel, and a rear wheel driving hydraulic circuit including a directional switching valve 11R between the hydraulic pump 1 and the R motor 3 which receives the driving hydraulic pressure from the hydraulic pump 1 via a directional switching valve 11R so as to drive the rear wheel, and each of which is structured to be a closed center type. In this case, details are not illustrated, however, as is easily understood from the matter that each of the directional switching vales 11F and 11R is a closed center type and the hydraulic pump 1 is a variable volume type, the hydraulic circuit in accordance with this embodiment has the following flow rate characteristic.

That is, the flow rate characteristic, "a passing flow rate Q of each of the directional switching valves 11F and 11R (that is, a rotational speed of a motor) is in proportional to an opening area A of each of the directional switching valves 11F and 11R without relation to a magnitude of a load of the hydraulic motor 1 when a differential pressure between a front and a rear of each of the directional switching valves 11F and 11R is maintained to be constant" can be obtained. In this case, since each of the directional switching valves 11F and 11R is a closes center type, it is possible to maintain the differential pressure $\Delta P$ between the front and the rear. However, the maintenance is performed by the hydraulic pump 1. That is, the hydraulic pump 1 always inspects a hydraulic pressure in a downstream side of each of the directional switching valves 11F and 11R, and is controlled on the basis of the detected pressure so as to increase a discharge amount when the differential pressure between the front and the rear of each of the directional switching valves 11F and 11R is going to be small and on the contrary, reduce the discharge amount when the differential pressure between the front and the rear of each of the directional switching valves 11F and 11R is going to be large. Accordingly, the differential pressure $\Delta P$ between the front and the rear of each of the directional switching valves 11F and 11R can be maintained to be constant and the flow rate characteristic can be obtained.

In the hydraulic circuit mentioned above, at a time of traveling in a four-wheel drive which receives the switching signal S2 from the switching signal transmission means 7, command signals S61 and S63 for switching from a neutral position to a forward moving position, or command signals S62 and S64 for switching from the neutral position to the forward moving position are input to each of the directional switching valves 11F and 11R from the controller 8. That is, when the forward and backward moving lever 6 transmits the forward moving signal S11 to the controller 8, the controller 8 transmits the command signals S61 and S63, and on the contrary, when the forward and backward moving lever 6 transmits the backward moving signal S12, the controller 8 transmits the command signals S62 and S64. These control signals S61, S62, S63 and S64 have a magnitude in proportion to a magnitude of the pedaling angle $\theta$ signal of the accelerator pedal 5, and expand and compress the opening area A of each of the directional switching valves 11F and 11R. Then, a flow rate corresponding to the opening area A is supplied to the F motors 2 and 2 and the R motor 3 on the basis of the flow rate characteristic.

In this case, at a time of traveling in a two-wheel drive, the controller 8 inputs the control signal S61 or S62 only to the directional switching valve 11R. A control of an operation of each of the clutches 4 and 4 from the controller 8 at a time of switching from the two-wheel drive to the four-wheel drive will be described below.

An oil passage from the directional switching valve 11F to the F motors 2 and 2 and an oil passage from the directional switching valve 11R to the R motor 3 are connected by a communication valve 12 corresponding to means for communicating the motor oil passages. The communication valve 12 is switched from a shut-off position D to a communication position C when receiving a command signal S7 from the controller 8. The communication valve 12 is set to the shut-off position D at a time of traveling at a low speed in the four-wheel drive and a volume of the R motor 3 is set to be a maximum volume value DRmax, thereby separately supplying a flow rate to the F motors 2 and 2 and the R motor 3 from each of the directional switching valves 11F and 11R so as to obtain independent high traction forces, respectively. On the contrary, at a time of traveling at a high speed in the four-wheel drive, a flow rate is separately supplied to the F motors 2 and 2 and the R motor 3 from each of the directional switching valves 11F and 11R and the communication valve 12 is set at the communication position C so as to connect each of the oil passages of the R motor 3 and the F motors 2 and 2 and apply an excess flow rate of the R motor 3 (an excess flow rate of the flow rate to the R motor 3, which is made to have a high speed by gradually reducing a volume DR by the controller 8 and generated together therewith) to the F motors 2 and 2, whereby a stable high speed traveling can be secured.

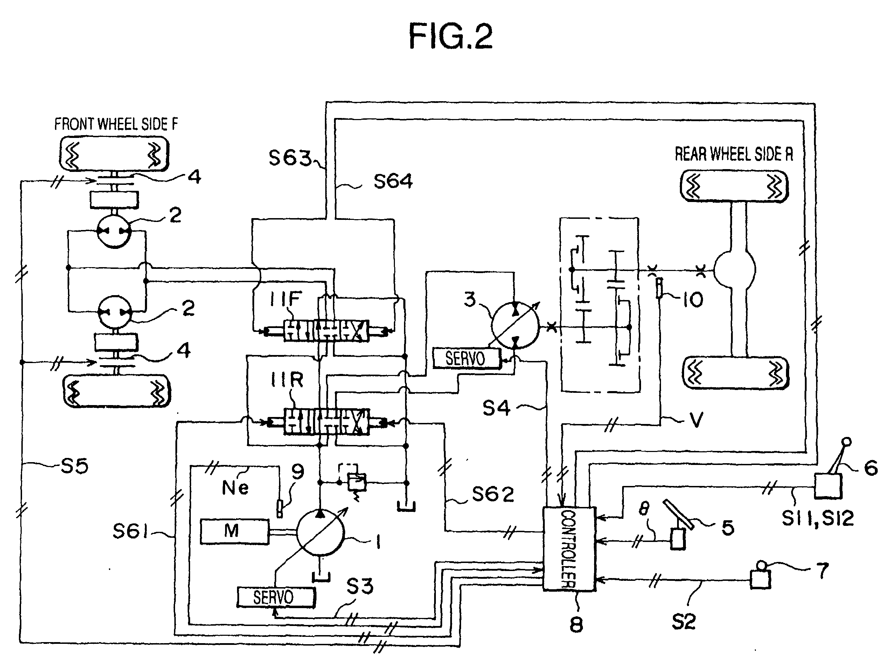

The apparatus in accordance with the second embodiment has, as shown in Fig. 2, the directional switching valve 11F between the hydraulic pump 1 and the F motors 2 and 2 and the directional switching valve 11R between the hydraulic pump 1 and the R motor 3, and each of them is structured to be an open center type. That is, they form a general hydraulic circuit. Accordingly, there is not the flow rate characteristic in the hydraulic circuit in accordance with the first embodiment. Further, the hydraulic circuit in accordance with this embodiment is made in a parallel connection, and further, does not have the communication valve 12 in the first embodiment. However, the directional switching valve 11F forms communication means.

Here, in the two-wheel drive, the controller 8 inputs the control signal S61 or S62 only to the directional switching valve 11R, however, in the four-wheel drive which receives the signal S2 from the switching signal transmission means 7, the controller 8 inputs the control signal S61 and S63 or S62 and S64 to each of the directional switching valves 11F and 11R. In this case, a control of an operation of each of the clutches 4 and 4 from the controller 8 at a time of switching from the two-wheel drive state to the four-wheel drive state will be described below.

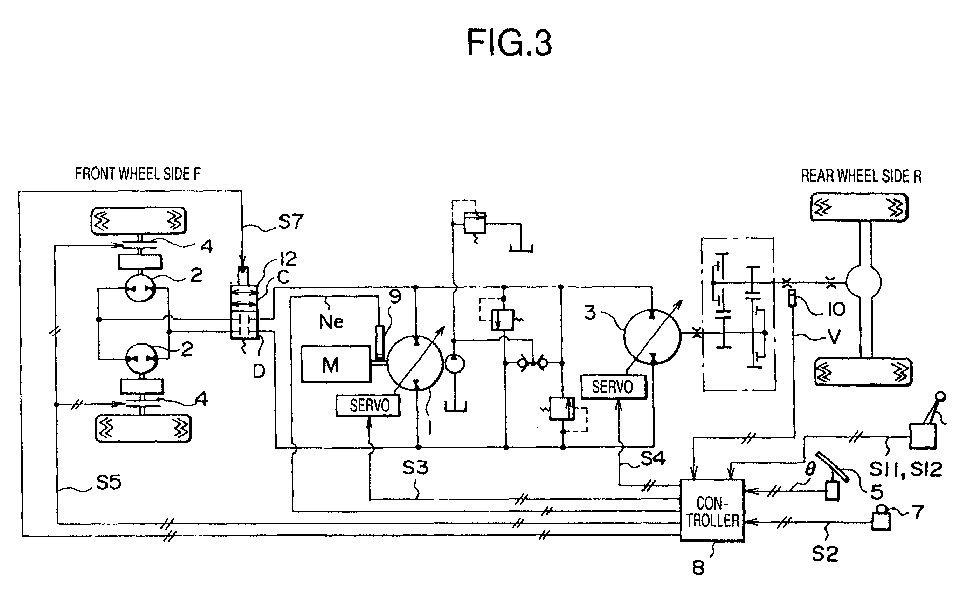

The apparatus in accordance with the third embodiment is, as shown in Fig. 3, a hydraulic circuit forming a closed circuit, and does not have the directional switching valves 11F and 11R in the first and second embodiments between the hydraulic pump 1 and the F motors 2 and 2 and between the hydraulic pump 1 and the R motor 3. That is, the vehicle speed V is controlled in accordance that the controller 8 controls the servo mechanism of the hydraulic pump 1 by the command signal S3 and on the contrary, controls the servo mechanism of the R motor 3 by the control signal S4. However, the oil passage from the hydraulic pump 1 to the F motors 2 and 2 and the oil passage from the hydraulic pump 1 to the R motor 3 are connected by the communication valve 12. The communication valve 12 receives the signal S7 from the controller 8.

That is, in the two-wheel drive, the controller 8 transmits no signal to the communication valve 12. In this case, the communication valve 12 is at the shut-off position D. On the contrary, when the switching signal S2 is transmitted to the controller 8 by the switching signal transmission means 7, the controller 8 applied the command signal S7 to the communication valve 12 so as to set it at the communication position C. The four-wheel drive is achieved by this communication position C. In this case, a control of an operation of each of the clutches 4 and 4 from the controller 8 at a time of switching from the two-wheel drive state to the four-wheel drive state will be described below.

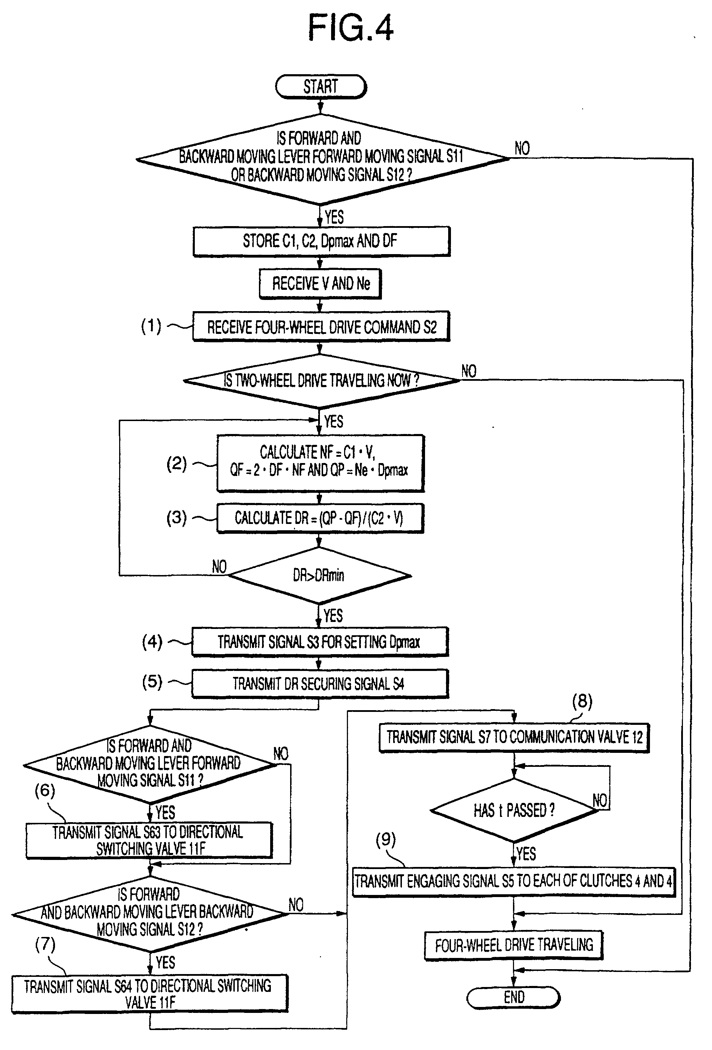

Next, the operation control of each of the clutches 4 and 4 from the controller 8 at a time of switching from the two-wheel drive state to the four-wheel drive high speed state in the first embodiment will be in detail described below with reference to Fig. 4.

(1) At first, In the case that the switching signal transmission means 7 is in the two-wheel drive state, when the operator operates it so as to set the four-wheel drive state, the command signal S2 is input to the controller 8.

(2) Next, the controller 8 calculates a number of rotation NF = C1 · V of the F motors 2 and 2 from the vehicle speed V input from the vehicle speed sensor 10 and a previously stored speed reduction ratio C1 (a speed reduction ratio C1 from the F motors 2 and 2 to the front wheel), and calculates a flow rate QF necessary for a synchronous rotation of the front wheel with the rear wheel from a fixed volume DF of the F motors 2 and 2. That is, the following formula is established.

$$QF = 2 \cdot DF \cdot C1 \cdot V$$

$$= 2 \cdot DF \cdot NF$$

Further, in consequence with this calculation, a flow rate QP of the hydraulic pump 1 is calculated from a number of rotation Ne input from an engine rotation sensor 9 (a number of rotation Ne of the hydraulic pump 1) and a previously stored maximum volume DPmax of the hydraulic pump 1.

$$QP = Ne \cdot Dpmax$$

(3) Then, the controller 8 calculates a volume DR of the R motor 3 for securing the necessary flow rate QF from a previously stored speed reduction ratio C2 (a speed reduction ratio C2 from the R motor 3 to the rear wheel) and the flow rate QP = Ne · DPmax. In this case, since a flow rate QR of the R motor 3 is expressed by QR = QP - QF, and QR = C2 · V · DR is established, the following formula is es-

tablished.

$$C2 \cdot V \cdot DR = QP - QF$$

The volume DR of the R motor 3 is calculated in accordance with the following formula.

$$DR = (QP - QF) / (C2 \cdot V)$$

(4) When the calculated volume DR of the R motor 3 is over a minimum volume value DRmin, a command signal S3 for setting the discharge volume Dp of the hydraulic pump 1 to a maximum discharge volume Dpmax is input to the serve mechanism of the hydraulic pump 1.

(5) The controller 8 inputs the discharge volume signal S4 to the servo mechanism of the R motor 3 so as to set the volume DR.

(6) When the signal of the forward and backward moving lever 6 is the forward moving signal S11, in the hydraulic circuit in accordance with the first and second embodiments, the command signal S63 is transmitted so as to gradually open the directional switching valve 11F.

(7) Here, when the signal of the forward and backward moving lever 6 is not the forward moving signal S11 but the backward moving signal S12, the command signal S64 is transmitted so as to gradually open the directional switching valve 11F.

(8) Further, in the hydraulic circuit in accordance with the first and third embodiments, the command signal S7 is transmitted so as to gradually open the communication valve 12. Accordingly, the flow rate QF so that the front wheel can synchronously rotate with the rear wheel flows into the F motors 2 and 2.

(9) The controller 8 transmits a command signal S5 so as to engage the clutches 4 and 4 when a predetermined time t has passed. Therefore, the switching from the two-wheel drive to the four-wheel drive is completed, so that it is possible to travel in the four-wheel drive.

In accordance with the operation control mentioned above, when switching from the two-wheel drive to the four-wheel drive, the F motors 2 and 2 and the front wheel can completely perform a synchronous rotate rotation with the rear wheel, and there is no shock occurred at a time of switching. In this case, when the operator operates the switching signal transmission means 7 in addition that the switching signal transmission means 7 have been already at the four-wheel position, the steps (1) to (9) mentioned above are not executed, and the four-wheel drive is continued.

In this case, the time t mentioned above is set for the reason mentioned below. It is because the controller 8 calculates the steps (1) to (8) for about some tens nanoseconds, however, a very long mechanical lag is generated, for example, before the hydraulic pump 1 obtains the maximum volume DPmax, before the R motor obtains the volume DR and before the F motors 2 and 2 synchronously rotates the front wheel with the rear wheel. Accordingly, it is desirable to adjust the time t in the following manner.

When the pedaling angle θ signal from the accelerator pedal 5 is input, the controller 8 applies the command signal S61 or S62 to the directional switching valve 11R in the case of the hydraulic circuit in accordance with the first and second embodiments. In the case of the hydraulic circuit in accordance with the third embodiment, the controller 8 applies each of the signals S3 and S4 to, for example, the hydraulic pump 1 and the servo mechanism of the R motor 3. Therefore, it is possible to optimize the time t by utilizing the pedaling angle signalθ. That is, when the pedaling angle signal θ is large, it corresponds to a high speed traveling, and in almost cases, the volume DP of the hydraulic pump 1 at this time becomes the maximum volume DPmax. In this case, the step (4) mentioned above is not required, and a response lag is shortened at that degree. That is, since the greater the pedaling angle signal θ is, the shorter the lag before the front wheel synchronously rotates with the rear wheel is, it is possible to shorten the time t. In accordance with the first to third embodiments, t = 0.5 second is set when the pedaling angle θ is between 0 and a medium degree, and t = 0.3 second is set when the pedaling angle θ is between the medium degree and a maximum value, thereby completely preventing the shock from generating.

In this case, the switching from the four-wheel drive to the two-wheel drive is performed by breaking each of the clutches 4 and 4 at the same time of switching the directional switching valve 11F to the neutral position in the case of the first and second embodiments. On the contrary, by braking each of the clutches 4 and 4 at the same time of setting the communication valve 12 at the shut-off position D in the case of the first and third embodiments.

The present invention is useful for a two-wheel/four-wheel drive hydraulic traveling apparatus for a vehicle and a drive switching method of the same which does not generate a shock at a time of switching from a two-wheel drive state to a four-wheel drive state.

**Claims**

1. A drive switching method for a two-wheel/four-wheel drive hydraulic traveling apparatus of a vehicle having a variable volume type hydraulic pump (1) driven by an engine, a rear wheel drive hydraulic circuit including a variable volume type hydraulic motor (3) which receives a driving pressurized oil from the variable volume type hydraulic pump via a directional switching valve (11R) so as to drive a rear wheel, a front wheel drive hydraulic circuit including a fixed volume type hydraulic motor (2) which receives a driving pressurized oil from the variable volume type hydraulic pump via a directional switching valve (11F) so as to drive a front wheel, a clutch (4) intermittently connecting between an output shaft of the fixed volume type hydraulic motor and the front wheel, and a communication valve (12) intermittently communicating between said front wheel and rear wheel drive hydraulic circuits, **characterized in that** when a signal S2 for switching to the four-wheel drive state is transmitted from a drive switching signal transmission means (7), said front wheel and rear wheel drive hydraulic circuits are communicated with each other, and an excess flow rate generated by changing a volume of said variable volume type hydraulic motor (3) from a discharge flow rate QP of said variable volume type hydraulic pump (I) is flowed into the front wheel drive hydraulic circuit, and when the rotation of said fixed volume type hydraulic motor (2) reaches a flow rate QF synchronizing with the rotation of the variable volume type hydraulic motor, said clutch (4) is engaged so as to switch to the four-wheel drive state.

2. A two-wheel/four-wheel drive hydraulic traveling apparatus having a variable volume type hydraulic pump (1) driven by an engine, a rear wheel drive hydraulic circuit including a variable volume type hydraulic motor (3) which receives a driving pressurized oil from the variable volume type hydraulic pump via a directional switching valve (11R) so as to drive a rear wheel, a front wheel drive hydraulic circuit including a fixed volume type hydraulic motor (2) which receives a driving pressurized oil from the variable volume type hydraulic pump via a directional switching valve (11F) so as to drive a front wheel, a clutch (4) intermittently connecting between an output shaft of the fixed volume type hydraulic motor and the front wheel, and a communication valve (12) intermittently communicating between said front wheel and rear wheel drive hydraulic circuits, and a control means (8) for operating a switching valve on the basis of a signal transmitted from the communication valve (12), **characterized in that** a drive switching signal transmission means (7) transmits a signal S2 for switching to a four-wheel drive state from a two-wheel drive state for supplying the pressurized oil to said rear wheel driving hydraulic circuit, and that the control means (8) is structured, when receiving the signal S2, to calculate a discharge flow rate QP from a number of rotation Ne of the variable volume type hydraulic pump (1) and a maximum discharge volume Dpmax, to calculate a flow rate QF at which the rotation of the front wheel on the basis of said fixed volume type hydraulic motor (2) is synchronous with the rotation of the rear wheel on the basis of said variable volume type hydraulic motor (3) from a volume DF of the fixed volume type hydraulic motor and a number or rotation NF, to transmit a discharge volume control signal S4 to said variable volume type hydraulic motor (3) so as to generate an excess flow rate corresponding to the flow rate QF, to transmit a discharge volume control signal S7, S63 and S64 to the directional switching valve (11F) of said front wheel drive hydraulic circuit and the communication valve (12) during the transmission or after the transmission so that the excess flow rate of said discharge flow rate is flowed into the front wheel dirve hydraulic circuit, and to transmit a signal S5 for engaging said clutch (4) when a predetermined time t has passed after the transmission.

**Patentansprüche**

1. Antriebs-Umschaltverfahren für eine Zwei-Rad/ Vier-Rad-Antriebs-Hydraulikvorrichtung eines Fahrzeugs, aufweisend eine durch einen Motor angetriebene volumenvariable Hydraulik-Pumpe (1), einen Hinterrad-Antriebshydraulikkreislauf mit einem volumenvariablen Hydraulikmotor (3), der via ein Richtungsumschaltventil (11R) von einer volumenvariablen Hydraulikpumpe Triebdrucköl erhält um ein Hinterrad anzutreiben, einen Vorderrad-Antriebshydraulikkreislauf mit einem volumenkonstanten Hydraulikmotor (2), der via ein Richtungsumschaltventil (11F) von einer volumenvariablen Hydraulikpumpe Triebdrucköl erhält um ein Vorderrad anzutreiben, eine eine Abtriebswelle des volumenkonstanten Hydraulikmotors und das Vorderrad intermittierend verbindende Kupplung (4) und ein mit dem Vorderrad- und dem Hinterrad-Hydraulikkreislauf intermittierend kommunizierendes Kopplungs-Ventil (12), **dadurch gekennzeichnet, dass**, wenn ein Signal S2 zum Umschalten in den Vier-Rad-Antriebszustand von einer Antriebsumschaltsignal-Übertragungseinrichtung (7) übertragen wird, der Vorderrad- und der Hinterrad-Antriebshydraulikkreislauf miteinander verbunden werden und ein Durchsatzüberschuss, der durch Verändern des Volumens des volumenvariablen Hydraulikmotors (3) ausgehend von einem Austrittsdurchsatz QP der volumenvariablen Hydraulikpumpe (1) erzeugt wird, in den Vorderrad-Antriebshydraulikkreislauf eingebracht wird und, wenn die Umdrehung des volumenkonstanten Hydraulikmotors (2) mit der Umdrehung des volumenvariablen Hydraulikmotors gleichlaufend einen Durchsatz QF erreicht, die Kupplung (4) eingekuppelt wird um in den Vier-Rad-Antriebszustand umzuschalten.

2. Zwei-Rad/Vier-Rad-Antriebs-Hydraulikvorrichtung, aufweisend eine motorgetriebene volumenvariable Hydraulikpumpe (1), einen Hinterrad-Antriebshydraulikkreislauf, der einen volumenvariablen Hydraulikmotor (3) aufweist, der via ein Richtungsumschaltventil (11R) von der volumenvariablen Hydraulikpumpe Triebdrucköl erhält um ein Hinterrad anzutreiben, einen Vorderrad-Antriebshydraulikkreislauf, der einen volumenkonstanten Hydraulikmotor (2) aufweist, der via ein Richtungsumschaltventil (11F) von der volumenvariablen Hydraulikpumpe Triebdrucköl erhält um ein Vorderrad anzutreiben, eine eine Abtriebswelle des volumenkonstanten Hydraulikmotors und das Vorderrad intermittierend verbindende Kupplung (4) und ein mit dem Vorderrad- und dem Hinterrad-Hydraulikkreislauf intermittierend kommunizierendes Kopplungs-Ventil (12) und eine Steuereinrichtung (8) zum Betätigen eines Umschaltventils auf der Basis eines von dem Kopplungs-Ventil (12) übertragenen Signals, **dadurch gekennzeichnet, dass** eine Antriebs-Umschaltsignal-Übertragungseinrichtung (7) ein Signal S2 zum Umschalten von einem Zwei-Rad-Antriebszustand in einen Vier-Rad-Antriebszustand überträgt um dem Hinterrad-Antriebshydraulikkreislauf Drucköl zuzuführen und dass die Steuereinrichtung (8) so strukturiert ist, dass, wenn das Signal S2 empfangen wird, ein Austritts-Durchsatz QP aus einer Drehzahl Ne der volumenvariablen Hydraulikpumpe (1) und einem maximalen Austrittsvolumen Dpmax berechnet wird, aus dem Volumen DF des volumenkonstanten Hydraulikmotors und der Drehzahl NF ein Durchsatz QF berechnet wird, bei dem die Rotation des Vorderrads auf der Basis des volumenkonstanten Hydraulikmotors (2) mit der Rotation des Hinterrads auf der Basis des volumenvariablen Hydraulikmotors (3) im Gleichlauf ist, ein Austrittsvolumen-Steuersignal S4 zu dem volumenvariablen Hydraulikmotor (3) übertragen wird um einen dem Durchsatz QF entsprechenden Durchsatzüberschuss zu erzeugen, ein Austrittsvolumen-Steuersignal S7, S63 und S64 zu dem Richtungsumschaltventil (11F) des Vorderrad-Antriebshydraulikkreislaufs und dem Kopplungs-Ventil (12) während der Übertragung oder nach der Übertragung übertragen wird, so dass der Durchsatzüberschuss des Austrittsdurchsatzes in den Vorderrad-Hydraulikkreislauf eingebracht wird und ein Signal S5 zum Einkuppeln der Kupplung übertragen wird, wenn eine vorbestimmte Zeit t nach der Übertragung verstrichen ist.

**Revendications**

1. Procédé de commutation d'entraînement pour un appareil de déplacement hydraulique à deux roues/ quatre roues motrices d'un véhicule comportant une pompe hydraulique du type à volume variable (1) entraînée par un moteur, un circuit hydraulique d'entraînement de roue arrière incluant un moteur hydraulique du type à volume variable (3) qui reçoit une huile sous pression d'entraînement depuis la pompe hydraulique du type à volume variable par l'intermédiaire d'une soupape de commutation directionnelle (11R) de façon à entraîner une roue arrière, un circuit hydraulique d'entraînement de roue avant incluant un moteur hydraulique de type à volume fixe (2) qui reçoit une huile sous pression d'entraînement depuis la pompe hydraulique du type à volume variable par l'intermédiaire d'une soupape de commutation directionnelle (11F) de façon à entraîner une roue avant, un embrayage (4) connectant de manière intermittente un arbre de sortie du moteur hydraulique du type à volume fixe à la roue avant, une soupape de communication (12) faisant communiquer de manière intermittente lesdits circuits hydrauliques d'entraînement de roue avant et de roue arrière, **caractérisé en ce que** lorsqu'un signal S2 pour commuter à l'état quatre roues motrices est transmis depuis un moyen de transmission de signal de commutation d'entraînement (7), lesdits circuits hydrauliques d'entraînement de roue avant et de roue arrière communiquent entre eux et un débit en excès généré par un changement de volume dudit moteur hydraulique du type à volume variable (3) à partir d'un débit de décharge QP de ladite pompe hydraulique du type à volume variable (1) est mis à circuler dans le circuit hydraulique d'entraînement de roue avant, et lorsque la rotation dudit moteur hydraulique du type à volume fixe (2) atteint un débit QF de synchronisation avec la rotation du moteur hydraulique du type à volume variable, ledit embrayage (4) est embrayé de façon à commuter à l'état quatre roues motrices.

2. Appareil de déplacement hydraulique à deux roues /quatre roues motrices comportant une pompe hydraulique du type à volume variable (1) entraînée par un moteur, un circuit hydraulique d'entraînement de roue arrière incluant un moteur hydraulique du type à volume variable (3) qui reçoit une huile sous pression d'entraînement depuis la pompe hydraulique du type à volume variable par l'intermédiaire d'une soupape de commutation directionnelle (11R) de façon à entraîner une roue arrière, un circuit hydraulique d'entraînement de roue avant incluant un moteur hydraulique du type à volume fixe (2) qui reçoit une huile sous pression d'entraînement depuis la pompe hydraulique du type à volume variable par l'intermédiaire d'une soupape de commutation directionnelle (11F) de façon à entraîner une roue avant, un embrayage (4) connectant de manière intermittente un arbre de sortie du moteur hydraulique du type à volume fixe à la roue avant, et une soupape de communication (12) communiquant de manière intermittente entre lesdits circuits hydrauliques d'entraînement de roue avant et de roue arrière, et un moyen de commande (8) pour commander une soupape de commutation sur la base d'un signal transmis depuis la soupape de communication (12), **caractérisé en ce que** un moyen de transmission de signal de commutation d'entraînement (7) transmet un signal S2 pour commuter à un état à quatre roues motrices à partir d'un état à deux roues motrices pour délivrer l'huile sous pression audit circuit hydraulique d'entraînement de roue arrière, et **en ce que** le moyen de commande (8) est structuré, lorsqu'il reçoit le signal S2, pour calculer un débit de décharge QP depuis un certain nombre de rotations Ne de la pompe hydraulique du type à volume variable (1) et un volume de décharge maximal Dpmax, pour calculer un débit QF auquel la rotation de la roue avant sur la base dudit moteur hydraulique du type à volume fixe (2) est synchrone avec la rotation de la roue arrière sur la base dudit moteur hydraulique du type à volume variable (3) à partir d'un volume DF du moteur hydraulique du type à volume fixe et d'un nombre de rotations NF, pour transmettre un signal de commande de volume de décharge S4 audit moteur hydraulique du type à volume variable (3) de façon à générer un débit en excès correspondant au débit QF, pour transmettre un signal de commande de volume de décharge S7, S63 et S64 à la soupape de commutation directionnelle (11F) dudit circuit hydraulique d'entraînement de roue avant et de la soupape de communication (12) pendant la transmission ou après la transmission de sorte que le débit en excès dudit débit de décharge est mis à s'écouler dans le circuit hydraulique d'entraînement de roue avant et pour transmettre un signal S5 pour embrayer ledit embrayage (4) lorsqu'une durée prédéterminée t s'est écoulée après la transmission.

FIG.1

# FIG.2

# FIG.3

# FIG.4

START

IS FORWARD AND BACKWARD MOVING LEVER FORWARD MOVING SIGNAL S11 OR BACKWARD MOVING SIGNAL S12 ? — NO

YES

STORE C1, C2, Dpmax AND DF

RECEIVE V AND Ne

(1) RECEIVE FOUR-WHEEL DRIVE COMMAND S2

IS TWO-WHEEL DRIVE TRAVELING NOW ? — NO

YES

(2) CALCULATE NF = C1 · V, QF = 2 · DF · NF AND QP = Ne · Dpmax

(3) CALCULATE DR = (QP - QF) / (C2 · V)

NO — DR > DRmin

YES

(4) TRANSMIT SIGNAL S3 FOR SETTING Dpmax

(5) TRANSMIT DR SECURING SIGNAL S4

IS FORWARD AND BACKWARD MOVING LEVER FORWARD MOVING SIGNAL S11 ? — NO

(6) YES

TRANSMIT SIGNAL S63 TO DIRECTIONAL SWITCHING VALVE 11F

IS FORWARD AND BACKWARD MOVING LEVER BACKWARD MOVING SIGNAL S12 ? — NO

(7) YES

TRANSMIT SIGNAL S64 TO DIRECTIONAL SWITCHING VALVE 11F

(8) TRANSMIT SIGNAL S7 TO COMMUNICATION VALVE 12

HAS t PASSED ? — NO

YES

(9) TRANSMIT ENGAGING SIGNAL S5 TO EACH OF CLUTCHES 4 AND 4

FOUR-WHEEL DRIVE TRAVELING

END